# EUROPÄISCHE PATENTANMELDUNG

(11) **EP 4 663 077 A1**
(43) Veröffentlichungstag der Anmeldung: **17.12.2025**
(21) Anmeldenummer: 24180999.5
(22) Anmeldetag: 10.06.2024
(51) Int. Cl.: A47J 36/32, A47J 43/07, G01G 19/56

(54) **VERFAHREN ZUM BETREIBEN EINES KÜCHENGERÄTS, KÜCHENGERÄT, SYSTEM UND COMPUTERPROGRAMM**

(71) Anmelder: Vorwerk & Co. Interholding GmbH, 42275 Wuppertal (DE)
(72) Erfinder: Beckmann, Nils, 42857 Remscheid (DE); Tepel, Phillipp, 42349 Wuppertal (DE); Schüler, Sebastian, 42289 Wuppertal (DE); Hanz, Peter, 47269 Duisburg (DE)
(74) Vertreter: Cohausz & Florack

(57) **Zusammenfassung**

Offenbart wird ein Verfahren (500, 600) zum Betreiben eines Küchengeräts (4), bei dem mindestens ein Wiegeparameter mehrfach erfasst wird, bei dem ein Signal mit Wiegemesswerten ausgegeben wird, wobei die Wiegemesswerte dem Ergebnis der mehrfachen Erfassung des mindestens einen Wiegeparameters entsprechen, und bei dem das Signal mit den Wiegemesswerten in einem über die Zeit gleitenden Zeitintervall Tₑᵥₐₗ ausgewertet wird, das dadurch gekennzeichnet ist, dass auf der Grundlage der Wiegemesswerte ein Zubehörteil (6, 30) für das Küchengerät (4) erkannt wird. Daneben werden ein System (2) zum Zubereiten von Lebensmitteln, mit einem eine Wiegeeinrichtung (16, 18, 20) und eine Steuereinrichtung (14) aufweisenden Küchengerät (4) und mit mindesten einem Zubehörteil (6, 30), sowie ein Computerprogramm offenbart.

## Beschreibung

Vorliegend wird ein Verfahren zum Betreiben eines Küchengeräts offenbart, bei dem mindestens ein Wiegeparameter in einem über die Zeit gleitenden Zeitintervall mehrfach erfasst wird, bei dem ein Signal mit Wiegemesswerten ausgegeben wird, wobei die Wiegemesswerte dem Ergebnis der mehrfachen Erfassung des mindestens einen Wiegeparameters entsprechen, und bei dem das Signal mit den Wiegemesswerten in einem über die Zeit gleitenden Zeitintervall Tₑᵥₐₗ ausgewertet wird. Weiter wird ein Küchengerät mit einem Gehäuse, mit einer Wiegeeinrichtung und mit einer Steuereinrichtung offenbart, wobei die Wiegeeinrichtung dazu eingerichtet ist, mindestens ein Wiegeparameter mehrfach über die Zeit zu erfassen und ein Signal mit Wiegemesswerten, die dem mindestens einen, mehrfach über die Zeit erfassten Wiegeparameter entsprechen, auszugeben und an die Steuereinrichtung weiterzuleiten. Daneben werden ein System zum Zubereiten von Lebensmitteln, mit einem eine Wiegeeinrichtung und eine Steuereinrichtung aufweisenden Küchengerät und mit mindesten einem Zubehörteil, sowie ein Computerprogramm offenbart.

Küchengeräte der eingangs genannten Art sind bereits bekannt, insbesondere zum Verarbeiten von rohen oder halbfertigen Lebensmittelprodukten. Diese Küchengeräte weisen in der Regel ein Grundgerät auf, mit dem separate Funktionsteile zusammenwirken, um je nach erzieltem Gericht, Getränk oder Ähnliches ein Lebensmittel zu verarbeiten. Derartige Funktionsteile können durch Küchengerätanbieter als Zubehörteile verkauft werden, zum Beispiel als Kochgefäß, Gargefäß, Deckel, Schneideeinheit oder Rühraufsatz oder Ähnliches. Im Allgemeinen weisen jeweils das Zubehörteil und das Grundgerät jeweils miteinander kompatible Schnittstellen auf, die ein Zusammenwirken beider Bauteile ermöglichen. Insbesondere kann durch miteinander in Zusammenwirkung gebrachten Schnittstellen ein Antrieb eines beweglichen Elements des Zubehörteils durch einen in dem Grundgerät angeordneten Elektromotor erfolgen.

Häufig ist das Grundgerät für einen Einsatz mit unterschiedlichen Zubehörteilen vorgesehen, die ggf. nachträglich dazu gekauft werden können. Daneben werden oft Küchengeräte mit einer Auswahl an Zubereitungsanleitungen wie Kochrezepte vertrieben, entsprechend deren Bestandteile des Küchengerätsystems gesteuert werden können. Um sicherzustellen, dass die richtigen Zubehörteile zum richtigen Zeitpunkt eingesetzt werden, wird bei bekannten Küchengerätsystemen in der Regel eine manuelle Bestätigung durch den Nutzer abgefragt.

Es sind Küchengeräte bekannt, beispielsweise aus der Druckschrift EP 4 241 631 A1, die eine Erfassungseinrichtung am Grundgerät aufweisen, um Informationen aus einem Datenträger am Zubehörteil zu erfassen und so auch das Zubehörteil ggf. identifizieren zu können. Auch wenn derartige Küchengeräte eine dedizierte manuelle Bestätigung seitens des Nutzers entbehrlich macht, bleibt das Vorsehen von zusätzlichen Erfassungsmitteln und das Ausstatten der Zubehörteile mit gesonderten Datenträgern kostenintensiv und schwierig auf dem Markt durchzusetzen, insbesondere beim Nachrüsten von bereits verfügbaren Grundgeräten.

Vor diesem Hintergrund liegt der vorliegenden Erfindung die technische Aufgabe zu Grunde, Küchengeräte aus dem Stand der Technik zu verbessern, insbesondere das Erkennen von Zubehörteilen zu vereinfachen und nutzerfreundlich zu gestalten.

Die zuvor genannte Aufgabe wird durch ein Verfahren zum Betreiben eines Küchengeräts, bei dem mindestens ein Wiegeparameter mehrfach erfasst wird, bei dem ein Signal mit Wiegemesswerten ausgegeben wird, wobei die Wiegemesswerte dem Ergebnis der mehrfachen Erfassung des mindestens einen Wiegeparameters entsprechen, und bei dem das Signal mit den Wiegemesswerten in einem über die Zeit gleitenden Zeitintervall Tₑᵥₐₗ ausgewertet wird, dadurch gelöst, dass auf der Grundlage der Wiegemesswerte ein Zubehörteil für das Küchengerät erkannt wird.

Die zuvor genannte Aufgabe wird weiterhin durch ein Küchengerät mit einem Gehäuse, mit einer Wiegeeinrichtung und mit einer Steuereinrichtung, wobei die Wiegeeinrichtung dazu eingerichtet ist, mindestens ein Wiegeparameter mehrfach über die Zeit zu erfassen und ein Signal mit Wiegemesswerten, die dem mindestens einen, mehrfach über die Zeit erfassten Wiegeparameter entsprechen, auszugeben an die Steuereinrichtung weiterzuleiten, dadurch gelöst, dass die Steuereinrichtung dazu eingerichtet ist, das Signal mit den Wiegemesswerten auszuwerten und auf der Grundlage der Wiegemesswerte ein Zubehörteil für das Küchengerät zu erkennen, insbesondere ein bestimmungsgemäßes Einsetzen des Zubehörteils zu erkennen.

Die zuvor genannte Aufgabe wird weiterhin durch ein System zum Zubereiten von Lebensmitteln, mit einem eine Wiegeeinrichtung und eine Steuereinrichtung aufweisenden Küchengerät, insbesondere einem Küchengerät gemäß der vorliegende Offenbarung, und mit mindesten einem Zubehörteil, dadurch gelöst, dass die Steuereinrichtung des Küchengeräts dazu eingerichtet ist, das mindestens eine Zubehörteil, insbesondere ein bestimmungsgemäßes Einsetzen des mindestens einen Zubehörteils am Küchengerät, auf der Grundlage von durch die Wiegeeinrichtung des Küchengeräts erfassten Wiegemesswerten zu erkennen.

Die zuvor genannte Aufgabe wird weiterhin durch ein Computerprogramm mit Weisungen gelöst, die, wenn durch einen Prozessor einer Steuereinrichtung eines Küchengeräts gemäß der vorliegenden Offenbarung oder eines Systems gemäß der vorliegenden Offenbarung ausgeführt, das Küchengerät dazu veranlasst, ein Verfahren gemäß der vorliegenden Offenbarung durchzuführen.

Mit dem Verfahren, dem Küchengerät, dem System und dem Computerprogram kann jeweils eine Wiegeeinrichtung, die bei Küchengeräten häufig bereits vorhanden ist, um Lebensmittel zu wiegen, auch zum Erkennen eines Zubehörteils bzw. ein Einsetzen eines bestimmten Zubehörteils verwendet werden. Dadurch kann auf das Vorsehen von gesonderten Erfassungs- bzw. Erkennungsmitteln am Grundgerät und auch auf ein Ausstatten der Zubehörteile mit gesonderten Datenträgern verzichtet werden.

Insgesamt werden durch die vorgeschlagenen Verfahren, Küchengerät, System und Computerprogram die Nutzerfreundlichkeit und der Nutzungskomfort beim Kochen am Küchengerät gesteigert. Darüber hinaus werden auch die Lebensdauer und die Nutzungssicherheit des Küchengeräts erhöht, indem ein nicht bestimmungsgemäßes Einsetzen oder ein nicht geeignetes Zubehörteil erfasst werden können.

Küchengeräte der eingangs genannten Art sind bereits bekannt, insbesondere zum Vorbereiten oder Verarbeiten von rohen oder halbfertigen Lebensmittelprodukten. Ein Küchengerät kann ein Grundgerät aufweisen, mit dem separate Funktionsteile oder Zubehörteile zusammenwirken, um je nach erzieltem Gericht, Getränk oder Ähnliches ein Lebensmittel zu verarbeiten. Im Allgemeinen weisen jeweils das Zubehörteil und das Grundgerät jeweils miteinander kompatible Schnittstellen auf, die ein Zusammenwirken beider Bauteile ermöglichen. Insbesondere kann durch miteinander in Zusammenwirkung gebrachten Schnittstellen ein Antrieb eines beweglichen Bauteils des Zubehörteils durch einen in dem Grundgerät angeordneten Elektromotor erfolgen.

Ein Grundgerät im Sinne der vorliegenden Erfindung ist vorzugsweise als Basis für den Einsatz von Zubehörteilen ausgestaltet, indem es eine Schnittstelle für ein Zusammenwirken mit mindestens einem Zubehörteil aufweist. Das Grundgerät weist ein Gehäuse auf, in dem ein Elektromotor zum Antrieb von Zubehörteilen, beispielsweis in Form einer Messereinheit oder eines Rühraufsatzes, angeordnet ist.

Als Zubehörteil wird jedes für ein Zusammenwirken mit dem Grundgerät ausgebildetes Teil verstanden. Das Zubehörteil kann mittelbar oder unmittelbar am Grundgerät einsetzbar sein, wobei für ein unmittelbares Einsetzen das Zubehörteil eine mit der Schnittstelle des Grundgeräts kompatible Schnittstelle aufweist, und wobei für ein unmittelbares Einsetzen das Zubehörteil an einem weiteren Zubehörteil angesetzt ist, das wiederum unmittelbar am Grundgerät eingesetzt ist. Der Begriff "Einsetzen" umfasst, unter anderem, die Handlungen aus der Liste: Verbinden, Koppeln, Montieren, Aufsetzen, Anbringen, Aufbringen und Ähnliches. Insbesondere ist ein Zubehörteil zur Erweiterung der Funktion des Grundgeräts ausgebildet, zum Beispiel als Schneide-, Rühr-, Koch-, Wiege-, Gar-, Dampf- oder Abdeckungseinheit. Beispiele für ein Zubehörteil sind: Garkorb, Messbecher, Garaufsatz, Rühraufsatz, Kochtopf, Schneideeinheit, Deckel, wobei diese Liste nicht abschließend ist. Außerdem kann ein Zubehörteil eine Zusatzfunktion aufweisen, beispielsweise eine Heizung oder Sensoren. Daneben können Zubehörteile miteinander kombinierbar sein. Ein Beispiel hierfür ist eine Kombination aus einem Kochgefäß, einer Messereinheit und einem Deckel. Ein weiteres Beispiel ist eine Kombination eines Rühraufsatzes, der mit einer Messereinheit zusammen montiert werden kann.

Die Funktion, für die das Zubehörteil vorgesehen ist, bezeichnet vorzugsweise den Zubehörteiltyp. Weiter kann das Zubehörteil anhand von mindestens einem Parameter aus der folgenden Liste gekennzeichnet sein, wobei diese Liste nicht abschließend ist: Nettogewicht, Material, Typ, Anwendung, Geometrie, Schnittstelle zur Verbindung mit dem Grundgerät.

Vorzugsweise ist die Steuereinrichtung in dem Gehäuse oder am Gehäuse des Grundgeräts des Küchengeräts angeordnet. Die Steuereinrichtung weist vorzugsweise einen Prozessor mit einem Speichermedium auf. Insbesondere kann ein Computerprogramm mit Befehlen auf dem Speichermedium gespeichert sein, deren Ausführung durch den Prozessor die Durchführung eines Betriebsverfahrens durch das Küchengerät bewirkt. Auf dem Speichermedium kann eine Datenbank mit Identifikationsmerkmalen, Gewichtsinformationen, Zubereitungsvorschriften und / oder Kochinformationen gespeichert sein. Insbesondere kann die Steuereinrichtung für ein zeitnahes oder gleichzeitiges Empfangen und Verarbeiten von mindestens zwei durch die Wiegeeinrichtung erfassten Wiegemesswerten eingerichtet sein.

Die Wiegeeinrichtung ist dazu eingerichtet, mindestens ein Wiegeparameter mehrfach über die Zeit zu erfassen und ein Signal mit Wiegemesswerten, die dem mindestens einen, mehrfach über die Zeit erfassten Wiegeparameter entsprechen, auszugeben und an die Steuereinrichtung weiterzuleiten. Hierzu kann die Wiegeeinrichtung dazu eingerichtet sein, den mindestens einen Wiegeparameter fortlaufend über die Zeit und mit einer Abtastfrequenz f_{sampling} zu erfassen. Die Wiegeeinrichtung kann beispielweise ein Piezoelement, ein analoges Kraftmesselement, ein Kraftsensor mit integrierter Signalverarbeitungseinheit, Dehnungssensoren für Zug- oder Druckkräftemessungen aufweisen. Daneben kann die Wiegeeinrichtung mindestens einen Dehnungsmessstreifen aufweisen, wobei der mindestens eine Dehnungsmessstreifen auf einem Träger aufgebracht ist und an einem Fußelement des Küchengeräts bzw. des Gehäuses des Küchengeräts angeordnet ist. Ein Beispiel für die Ausbildung eines derartigen Dehnungsmessstreifens ist der Druckschrift DE 10 2009 059 242 A1 zu entnehmen. So kann beispielsweise ein Dehnungsmessstreifen an jedem Fußelement des Grundgeräts angebracht sein, wobei das Grundgerät mindestens drei Fußelemente aufweist. Dabei können Wiegemesswerte, die durch die einzelnen Dehnungsstreifen ausgegeben werden, gemeinsam oder einzeln ausgewertet werden.

Beispiele für Wiegeparameter sind Kraft, Druck, Masse, Gewicht. Wiegemesswerte können Werte für eine Kraft, einen Druck, eine Masse, ein Gewicht sein.

Das Signal mit den Wiegemesswerten wird in einem über die Zeit gleitenden Zeitintervall Tₑᵥₐₗ ausgewertet. Der Zeitintervall ist vorzugsweise als Zeitabstand zwischen einem ersten Zeitpunkt und einem zweiten Zeitpunkt vordefiniert. Dabei kann der Zeitintervall bzw. der Zeitabstand in Abhängigkeit von einer Abtastfrequenz f_{sampling} bestimmt sein. So kann beispielsweise der Zeitintervall Tₑᵥₐₗ einer Abtastperiode Tₑᵥₐₗ sein, die einem Erfassen mit einer Abtastfrequenz f_{sampling} entspricht. Bei der Auswertung des Signals werden die Wiegemesswerte berücksichtigt, die in einem Zeitraum, der dem Zeitintervall Tₑᵥₐₗ entspricht, erfasst worden sind. Die Auswertung mit dem über die Zeit gleitenden Zeitintervall kann dadurch verwirklicht werden, dass die Grenzwerte des Zeitintervall sukzessiv inkrementiert werden und der Zeitabstand zwischen den Grenzwerten beibehalten wird.

Ein bestimmungsgemäßes Einsetzen bzw. eine bestimmungsgemäße Position kann insbesondere ein Zustand sein, der ein für die Funktion des betroffenen Zubehörteils vorgesehenes Zusammenwirken mit dem Grundgerät erlaubt. So kann zum Beispiel eine bestimmungsgemäße Position für ein Zubehörteil, das für ein unmittelbares Einsetzen am Grundgerät vorgesehen ist, ein Zustand sein, in dem jeweilige, miteinander kompatible Schnittstellen des Zubehörteils und des Grundgeräts für einen Antrieb durch den Elektromotor oder eine Steuerung eines Heizelements des Zubehörteils verbunden sind.

Vorzugsweise ist ein bestimmungsgemäßes Einsetzen oder eine bestimmungsgemäße Position im Vorfeld definiert und als maschinenlesbare Information auf einem Speichermedium hinterlegt, auf das die Steuereinrichtung zugreifen kann. Dabei kann das bestimmungsgemäße Einsetzen als Referenzmuster hinterlegt sein, um so dann einen Vergleich zu ermöglichen und zu ermitteln, ob ein erfasstes Einsetzen mit dem vorgesehenen, bestimmungsgemäßen Einsetzen übereinstimmt. Vorzugsweise ist das Referenzmuster als maschinenlesbare Information im Kontext einer Zubereitungsanleitung für einen Zubereitungsvorgang hinterlegt.

Im Folgenden werden verschiedene Ausführungsformen des Verfahrens, des Küchengeräts, des Systems und des Computerprogramms beschrieben, wobei die einzelnen Ausführungsformen jeweils unabhängig voneinander für das Verfahren, das Küchengerät, das System und das Computerprogramm gelten. Darüber hinaus können die einzelnen Ausführungsformen beliebig miteinander kombiniert werden.

Bei einer Ausführungsform ist vorgesehen, dass Wiegemesswerte zusammen ein erfasstes Muster bilden, dass das erfasste Muster mit einem Referenzmuster verglichen wird, wobei das Referenzmuster einem Zubehörteil zugeordnet ist, und dass das Zubehörteil auf der Grundlage des Ergebnisses des Vergleiches zwischen dem erfassten Muster und dem Referenzmuster erkannt wird.

Dadurch kann ein Zubehörteil mit erhöhter Wahrscheinlichkeit erkannt werden als bei einem Erkennen lediglich auf der Grundlage von einer einfachen Gewichtsänderung. Darüber hinaus kann dadurch ein Zubehörteil erkannt werden, das beladen ist, beispielsweise ein Kochtopf mit Lebensmitteln. Ferner ermöglicht diese Ausführungsform ein Erkennen eines korrekten bzw. bestimmungsgemäßen Einsetzens des Zubehörteils am Küchengerät bzw. am Grundgerät. Dabei kann ein bestimmungsgemäßes Einsetzen durch eine vorgegebene Position des Zubehörteils definiert sein, wobei die vorgegebene Position herstellerseitig oder beispielsweise bei einer ersten Nutzung des Zubehörteils hinterlegt sein kann. Eine derartige vorgegebene Position kann durch Kontaktierung von Schnittstellen, Kontaktelementen oder Verbindungselementen bestimmt sein.

Das erfasste Muster kann durch einen dedizierten Algorithmus oder ein Softwareprogramm auf der Grundlage der Wiegemesswerte bestimmt bzw. aus dem Signal extrahiert werden.

Das Referenzmuster kann vorbestimmt sein, beispielsweise auf der Grundlage eines Erfassungsvorgangs. Das Referenzmuster kann lokal auf einem Datenspeicher der Steuereinrichtung des Küchengeräts oder zentral auf einem externen Server hinterlegt sein. Das Referenzmuster kann durch den Küchengeräthersteller oder durch den Nutzer hinterlegt worden sein. Als Referenzmuster kann eine Kurvenform oder Kurventendenzen dienen, die von absoluten Druck- oder Gewichtswerten losgelöst ist /sind. Alternativ oder zusätzlich können als Referenzmuster Orientierungswerte vorgesehen sein, beispielsweise als Zeitabstände zwischen Gewichts- oder Druckänderungen.

Das erfasste Muster sowie das Referenzmuster können beispielsweise durch die Geometrie oder Ausbildung des Zubehörteils, durch die vorgesehene Anordnung des Zubehörteils am Küchengerät, durch eine Schnittstellenverbindung zwischen dem Zubehörteil und dem Küchengerät, durch eine Verbindung zwischen einem Zubehörteil und einem weiteren Zubehörteil mit einer Zusatzfunktion und / oder durch eine Nutzergewohnheit bedingt sein. So kann sich beispielsweise ein typisches Einsetzverhalten für einen bestimmten Nutzer beim Einsetzen eines bestimmten Zubehörteils am Küchengerät ergeben. Dieses Einsetzverhalten kann dann bei der Auswertung der Wiegemesswerte beobachtet und ggf. basierend hierauf ein Referenzmuster erzeugt werden. Ein Beispiel für eine Verbindung zwischen einem Zubehörteil und einem weiteren Zubehörteil mit einer Zusatzfunktion ist eine Verbindung zwischen einer Rühraufsatzes, der mit einer Messereinheit zusammen montiert wird. Eine solche Verbindung kann in Zusammenhang mit einem weiteren, zusätzlichen Zubehörteil erfolgen, beispielsweise in dem Aufnahmeraum eines Kochtopfes, das am Grundgerät montierbar ist.

Bei einer Ausführungsform ist vorgesehen, dass Wiegemesswerte zusammen ein erfasstes Muster bilden, und dass das erfasste Muster mit einem Referenzmuster verglichen wird, wobei das Referenzmuster einem Zubehörteil zugeordnet ist, und dass ein bestimmungsgemäßes Einsetzen des Zubehörteils auf der Grundlage des Ergebnisses des Vergleiches zwischen dem erfassten Muster und dem Referenzmuster erkannt wird.

So kann sichergestellt werden, dass die richtigen Zubehörteile zum richtigen Zeitpunkt eingesetzt sind, auch ohne manuelle Bestätigung durch den Nutzer.

Auf der Grundlage des erkannten Einsetzens eines Zubehörteils kann ein Zubereitungsschritt am Küchengerät freigegeben werden. Alternativ oder zusätzlich kann auf der Grundlage eines aberkannten Einsetzens eines Zubehörteils kann ein Zubereitungsschritt am Küchengerät unterbunden werden. So kann die Sicherheit beim Betreiben des Küchengeräts gesteigert werden.

Insgesamt kann durch Vergleichen eines erfassten Musters mit einem Referenzmuster nicht nur ein Zubehörteiltyp, sondern auch sein bestimmungemäßes Einsetzen am Küchengerät erkannt werden, wodurch die Sicherheit und die Nutzerfreundlichkeit gesteigert werden und gleichzeitig auch eine kostengünstige Gestaltung des Systems möglich ist.

Beispielsweise können zwischen einem Einsetzen einer Messereinheit und einem Einsetzen eines Rühraufsatzes Unterschiede in den erfassten Wiegemesswerten festgestellt werden. Diese Unterschiede lassen sich regelmäßig beobachten, so dass für unterschiedliche Zubehörteile auch unterschiedliche Referenzmuster definiert werden können, die dann anhand eines Vergleichs mit den erfassten Wiegemesswerten bzw. mit erfassten Mustern eine Erkennung zulassen. Diese Unterschiede beruhen zumindest teilweise auf unterschiedlichen Ausbildungen, ggf. auch auf unterschiedlich gestalteten Schnittstellen zum Grundgerät, die dann bei der Montage bzw. beim Einsetzen des Zubehörteils unterschiedliche Handhabung und so auch unterschiedliche zeitliche Abläufe der Wiegemesswerte herbeiführen.

Ein Referenzmuster zur Erkennung eines bestimmungsgemäßen Einsetzens kann für eine Mehrzahl von Wiegeelementen der Wiegeeinrichtung vorgegeben sein. Weist zum Beispiel die Wiegeeinrichtung mehrere Dehnmessstreifen auf, die gleichzeitig jeweils ein Signal mit Wiegemesswerten ausgeben, kann für jedes Signal ein erfasstes Muster bestimmt werden und mit einem für diesen Dehnmessstreifen vorgesehenen Referenzmuster verglichen werden. Durch Berücksichtigen der dann erhaltenen Vergleichsergebnisse kann die Erfolgswahrscheinlichkeit der Erkennung gesteigert werden. Sind beispielsweise jeweils an einem rechten Fußelement und an einem linken Fußelement des Küchengeräts jeweils ein Dehnmessstreifen vorgesehen, so kann bei einem linkshändigen Nutzer ein anderes Referenzmuster als bei einem rechtshändigen Nutzer hinterlegt sein.

Bei einer Ausführungsform ist vorgesehen, dass eine Differenz Δm zwischen einem Wiegemesswert, der bei einem ersten Zeitpunkt des Zeitintervalls Tₑᵥₐₗ erfasst worden ist, und einem Wiegemesswert, der bei einem zweiten Zeitpunkt des Zeitintervalls Tₑᵥₐₗ erfasst worden ist, gebildet wird, und dass die gebildete Differenz Δm mit einem Referenzwert Δm_{ref} verglichen wird, wobei der Referenzwert Δm_{ref} dem Zubehörteil zugeordnet ist.

Dadurch kann erkannt werden, ob überhaupt ein Zubehörteil eingesetzt wurde. Darüber hinaus kann dadurch auch ein Zubehörteil erkannt werden, insbesondere wenn das Zubehörteil am Küchengerät eingesetzt wird, ohne geladen zu sein. In diesem Fall entsprechen die Wiegemesswerte dem Eigengewicht des Zubehörteils und eine Übereinstimmung mit dem Referenzwert, ggf. unter Anwenden eines Toleranzbereichs bei der Auswertung, kann als Grundlage für das Erkennen des Zubehörteils dienen.

Vorzugsweise entspricht der Referenzwert dem Eigengewicht des Zubehörteils. Der Referenzwert kann lokal auf einem Datenspeicher der Steuereinrichtung oder zentral auf einem externen Server hinterlegt sein.

Bei einer Ausführungsform ist vorgesehen, dass auf der Grundlage der gebildeten Differenz Δm_{ref} eine Wahrscheinlichkeit für den Einsatz des Zubehörteils bestimmt wird, dass die Wahrscheinlichkeit mit einer Wahrscheinlichkeitsschwelle verglichen wird, dass, falls die bestimmte Wahrscheinlichkeit die Wahrscheinlichkeitsschwelle überschreitet, das erfasstes Muster mit dem Referenzmuster verglichen wird, wobei das Referenzmuster dem Zubehörteil zugeordnet ist, und dass auf der Grundlage des Vergleichsergebnisses das Zubehörteil erkannt wird.

Durch Bestimmen der Wahrscheinlichkeit kann eine Vorsortierung mehrerer in Frage kommender Zubehörteile erfolgen. Insbesondere kann auf der Grundlage der Wahrscheinlichkeit eine Priorisierung der mehreren in Frage kommenden Zubehörteile durchgeführt werden, um dann das erfasste Muster mit den Referenzmustern, die diesen Zubehörteilen zugeordnet sind, in einer entsprechenden Reihenfolge zu vergleichen. Somit kann die Schnelligkeit des Verfahrens gesteigert werden, insbesondere beim Erfassen von Wiegemesswerten für ein beladenes Zubehörteil.

Die Wahrscheinlichkeitsschwelle kann einem Grenzwert eines Toleranzbereichs entsprechen. Dadurch kann die Empfindlichkeit des Erkennungsvorgangs eingestellt werden.

Bei einer Ausführungsform ist vorgesehen, dass das Signal mit den Wiegemesswerten durch ein Verfahren basierend auf maschinellem Lernen ausgewertet werden, wobei das Ergebnis der Auswertung eine Information über das erfasste Muster ist, oder dass das Signal mit den Wiegemesswerten durch ein Verfahren basierend auf einem analytischen Algorithmus ausgewertet werden, wobei das Ergebnis der Auswertung eine Information über das erfasste Muster ist.

Dadurch kann ein Zubehörteil zuversichtlich erkannt werden. Darüber hinaus lässt sich ggf. ein bereits bestehendes Küchengerät bzw. die Software seiner Steuereinrichtung nachrüsten, ohne dass zusätzliche Auswertemittel erforderlich sind.

Der analytische Algorithmus kann mindestens ein Element aus der Liste berücksichtigen: maximaler Betrag der Wiegemesswerte, die für den Zeitintervall Tₑᵥₐₗ erfasst worden sind; zeitlicher Verlauf der Wiegemesswerte im Zeitintervall Tₑᵥₐₗ; Betrag einer Ableitung; Verhältnis von Wiegemesswerten, die durch separate Wiegeelemente der Wiegeeinrichtung erfasst worden sind. Das Verfahren basierend auf maschinellem Lernen kann einen Vergleich des Signals mit trainierten Referenzmustern oder Signalen, die einem bestimmungsgemäßen Einsetzverhalten des Zubehörteils entsprechen, umfassen. Somit können Besonderheiten des Einsetzverhaltens für das Zubehörteil, beispielsweise durch ein Nutzerverhalten beeinflusst, selbständig erlernt werden.

Bei einer Ausführungsform ist vorgesehen, dass mindestens zwei Zubehörteile auf der Grundlage der Wiegemesswerte erkannt werden. Die mindestens zwei Zubehörteile können als zusammengebautes Ensemble erkannt werden, zum Beispiel indem ein Gesamtgewicht erkannt wird, das mindestens der Summe der Eigengewichte der mindestens zwei Zubehörteile entspricht. Alternativ oder zusätzlich können die mindestens zwei Zubehörteile nacheinander erkannt werden, beispielsweise wenn ein erstes Zubehörteil als erstes am Küchengerät eingesetzt wird, und dann ein zweites Zubehörteil am Küchengerät oder am ersten Zubehörteil eingesetzt wird. Dadurch können zum Beispiel ein Einsetzen eines Kochtopfes und dann einer Schneideeinheit im Kochtopf erkannt werden.

Bei einer Ausführungsform ist vorgesehen, dass vor dem Erfassen des mindestens einen Wiegeparameters eine Zubereitungsvorschrift mit Weisungen zum Zubereiten mindestens eines Lebensmittels aufgerufen wird, wobei mindestens eine Weisung der Zubereitungsvorschrift einem Einsetzen eines Zubehörteils am Küchengerät entspricht, und dass bei der Auswertung des Signals die Wiegemessewerte mit einer dem Zubehörteil zugeordneten Information, insbesondere mit einem dem Zubehörteil zugeordneten Referenzwert oder mit einem dem Zubehörteil zugeordneten Referenzmuster, verglichen wird. Alternativ ist vorgesehen, dass vor dem Erfassen des mindestens einen Wiegeparameters eine Zubereitungsvorschrift mit Weisungen zum Zubereiten mindestens eines Lebensmittels aufgerufen wird, wobei mindestens eine Weisung der Zubereitungsvorschrift einem Einsetzen eines Zubehörteils (6, 30) am Küchengerät (4) entspricht, und wobei mindestens eine Weisung der Zubereitungsvorschrift einem Lebensmittelgewicht entspricht, und dass bei der Auswertung des Signals die Wiegemessewerte mit einer dem Zubehörteil (6, 30) zugeordneten Information, insbesondere mit einem dem Zubehörteil (6, 30) zugeordneten Referenzwert oder mit einem dem Zubehörteil (6, 30) zugeordneten Referenzmuster, unter Berücksichtigung des Lebensmittelgewichts verglichen wird.

Somit kann im Rahmen eines durch Software unterstützen Kochens am Küchengerät bzw. eines sogenannten "guided cooking" untersucht werden, ob ein bestimmtes, erwartetes Zubehörteil am Küchengerät eingesetzt wurde. Damit können möglicherweise Zubehörteile, die in Bezug auf Gewicht und Einsetzverhalten oder Muster mit einem Zubehörteil aus der Zubereitungsschrift ähnlich sind, allerdings in der Zubereitungsvorschrift nicht vorgesehen sind, ausgeschlossen werden. Dies steigert die Erfolgsaussichten des Erkennungsvorgangs.

Hierdurch kann ggf. automatisch bestätigt werden, dass das erwartete Zubehörteil erkannt wurde.

Mit der oben angegebenen Alternativausführungsform kann auf eine Bestätigung durch den Nutzer einerseits, dass das in der Zubereitungsvorschrift vorgesehene Zubehörteil eingesetzt ist, und andererseits, dass ein vorgesehenes Gewicht an Lebensmittel hinzugefügt worden ist, verzichtet werden. Somit werden insgesamt weniger Handlungen des Nutzers erforderlich, um die einzelnen Schritte der Zubereitungsvorschrift durchzugehen und die Nutzerfreundlichkeit ist dadurch entsprechend gesteigert.

In einem konkreten Beispiel kann im Rahmen bei der Auswertung des Wiegemesswertes das Lebensmittelgewicht als Offset berücksichtigt werden, um dann einen Vergleich von Wiegemesswerten, die über diesem Offset liegen und ggf. ein erfasstes Muster bilden, mit einem Referenzmuster durchzuführen. So kann das Einsetzen eines Zubehörteils beispielsweise in Form eines Kochtopfes, eines Garkorbs oder eines Dampfaufsatzes, der ein Lebensmittel aufnimmt, anhand der Wiegemesswerte erkannt werden. Alternativ oder zusätzlich kann das Lebensmittelgewicht als Offset zu dem vordefinierten Referenzgewicht des Zubehörteils bei der Auswertung der Wiegemesswerte hinzugezählt werden. Im Ergebnis können dann ohne Nutzereingabe zwei Bestätigungsschritte automatisch erfolgen, also das Einsetzen des Zubehörteils und das Hinzufügen des Lebensmittels. Alternativ oder zusätzlich kann das Lebensmittelgewicht aus der Zubereitungsvorschrift als Grundlage zur Bestimmung eines Toleranzfensters bei der Erkennung eines Zubehörteils verwendet werden.

Wird ein Zubereitungsvorgang gemäß einer abgerufenen Zubereitungsvorschrift durchgeführt, kann vorgesehen sein, dass die Wiegemesswerte, eine Differenz zwischen zwei Wiegemesswerten oder ein erfasstes Muster lediglich mit Referenzwerten oder einem Referenzmuster verglichen werden, den Zubehörteilen aus der Zubereitungsvorschrift zugeordnet sind. So kann das Erkennen einfach und schnell durchgeführt werden.

Damit können möglicherweise Zubehörteile, die den in der Zubereitungsvorschrift vorgesehenen Zubehörteilen in Bezug auf Gewicht und Einsetzmuster ähneln, ausgeschlossen werden. Insgesamt können somit die Erfolgsaussichten beim Erkennen des Zubehörteils gesteigert werden.

Der Referenzwert und / oder das Referenzmuster können als Teil der Zubereitungsvorschrift hinterlegt sein, alternativ kann die Zubereitungsvorschrift Befehle zum Abrufen der dann zutreffenden Referenzwerte und / oder Referenzmuster aufweisen.

Bei einer Ausführungsform ist vorgesehen, dass die Zubereitungsvorschrift ein Einsetzen von mindestens zwei unterschiedlichen Zubehörteilen vorsieht, und dass, wenn bei der Auswertung des Signals Vergleiche der Wiegemesswerte mit Informationen, die den unterschiedlichen Zubehörteilen zugeordnet sind, ähnliche Ergebnisse ergeben, dasjenige Zubehörteil als erkannt und / oder als bestimmungsgemäß eingesetzt angegeben wird, das in einem aktuellen Zubereitungsschritt bzw. in einer aktuell durchzuführenden Weisung der Zubereitungsvorschrift vorgesehen ist.

So dienen Zubereitungsparameter, die durch die Zubereitungsvorschrift für einen aktuell durchzuführenden Zubereitungsschritt vorgegeben sind, als Grundlage zur Entscheidung, ob ein Zubehörteil als erkannt zu betrachten ist. Dadurch ist das Erkennungsverfahren robuster.

Ergebnisse von Vergleichen der Wiegemesswerte mit Informationen, die den unterschiedlichen Zubehörteilen zugeordnet sind, können als ähnlich angesehen werden, wenn diese Ergebnisse zum Beispiel in denselben Toleranzbereich fallen. Hierzu können ein Sollwert und ein Toleranzbereich relativ zum Sollwert vorgegeben sein. Hierüber kann die Empfindlichkeit des Erkennungsvorgangs eingestellt werden.

Darüber hinaus kann ein Einsetzen eines Zubehörteils erkannt und automatisch bestätigt werden, wobei auf eine Bestätigung durch eine Nutzereingabe verzichtet werden kann. Bei einer negativen Erkennung, also in dem Fall, in dem ein durch die Zubereitungsvorschrift vorgegebenes und somit erwartetes Zubehörteil nicht erkannt wird, kann dann ein entsprechender Hinweis ausgegeben werden, ggf. als Warnung, wenn es sich um ein sicherheitsrelevantes Zubehörteil handelt.

Bei einer Ausführungsform ist vorgesehen, dass das Erfassen des mindestens einen Wiegeparameters und die Auswertung des Signals mit den Wiegemesswerten im Anschluss zu einem Hochfahren oder Aktivieren des Küchengeräts eingeleitet werden, und dass bei der Auswertung des Signals die Wiegemessewerte mit Informationen aus einer Datenbank, insbesondere mit einem Referenzwert oder mit einem Referenzmuster verglichen werden, die jeweils einem mit dem Küchengerät kompatiblen Zubehörteil zugeordnet sind.

Somit kann ein Zubehörteil oder sein Einsetzen im laufenden Betrieb des Küchengeräts erkannt werden, auch wenn keine Vorgabe für ein Zubehörteil, beispielsweise in Form einer Zubereitungsvorschrift, vorliegt. In einer besonderen Ausführungsform kann vorgesehen sein, dass das Einsetzen eines Zubehörteils am Küchengerät ein Hochfahren des Küchengeräts einleitet, und dass das eingesetzte Zubehörteil bzw. sein bestimmungsgemäßes Einsetzen dann erkannt wird. Insgesamt kann dadurch ein mit dem Küchengerät kompatibles Zubehörteil unabhängig von einer Zubereitungsvorschrift und auf der Grundlage von Wiegemesswerten erkannt werden.

Es kann vorgesehen sein, dass das Erfassen von dem mindestens einen Wiegeparameter und ggf. auch das Auswerten des Signals kontinuierlich läuft, während das Küchengerät im Betrieb ist, beispielsweise während einer Wachphase, ggf. zusätzlich auch während einer Schlafphase des Betriebssystems des Küchengeräts. Somit kann ein Einsetzen eines Zubehörteils jederzeit erfasst werden. Sowohl in dem Fall, in dem eine Zubereitungsvorschrift ausgewählt ist, als auch in dem Fall, in dem keine Vorgabe für ein Zubehörteil, beispielsweise in Form einer Zubereitungsvorschrift, vorliegt, kann ein Erfassen mindestens eines Wiegeparameters und ein Auswerten des dann ausgegebenen Signals kontinuierlich erfolgen.

Bei einer Ausführungsform ist vorgesehen, dass beim positiven Erkennen eines Zubehörteils eine für das erkannte Zubehörteil geeignete Zubereitungsvorschrift aufgerufen wird, oder dass beim positiven Erkennen eines Zubehörteils und eines bestimmungsgemäßen Einsetzens des erkannten Zubehörteils eine für das erkannte Zubehörteil geeignete Zubereitungsvorschrift automatisch aufgerufen wird.

So kann erst ein Zubehörteil erkannt werden, und dann eine dazu passende Zubereitungsvorschrift automatisch vorgeschlagen oder sogar gestartet werden.

Bei einer Ausführungsform ist vorgesehen, dass die Wiegeeinrichtung und die Steuereinrichtung zusammen dazu eingerichtet sind, ein Verfahren nach der vorliegenden Offenbarung durchzuführen.

Bei einer Ausführungsform ist vorgesehen, dass eine Datenbank mit Informationen, die jeweils einem Zubehörteil zugeordnet sind, vorgesehen ist, und dass die

Steuereinrichtung dazu eingerichtet ist, die Informationen aus der Datenbank abzurufen und mit den erfassten Wiegemesswerten zu vergleichen.

Über eine Pflege der Datenbank kann eingestellt werden, welche Zubehörteile für das Küchengerät als zulässig bzw. geeignet zu erkennen sind. Die Datenbank kann intern auf einem Datenspeicher der Steuereinrichtung oder zentral auf einem externen Server hinterlegt sein.

Mitoffenbart wird ein computerlesbares Speichermedium, insbesondere Prozessor eines Küchengeräts nach der vorliegenden Offenbarung, mit einem Computerprogramm nach der vorliegenden Offenbarung. Vorzugsweise ist ein derartiges Speichermedium Teil eines Steuereinrichtung des Küchengeräts. Weitere Merkmale und Vorteile des Verfahrens, des Küchengeräts, des Systems und des Computerprogramms ergeben sich aus der nachfolgenden Beschreibung von Ausführungsbeispielen, wobei auf die beigefügte Zeichnung Bezug genommen wird.

In der Zeichnung zeigen
- Fig. 1: ein erstes Beispiel für Wiegemesswerte, die in Abhängigkeit von der Zeit dargestellt sind;
- Fig. 2: ein zweites Beispiel für Wiegemesswerte, die in Abhängigkeit von der Zeit dargestellt sind;
- Fig. 3: ein drittes Beispiel für Wiegemesswerte, die in Abhängigkeit von der Zeit dargestellt sind;
- Fig. 4: ein viertes Beispiel für Wiegemesswerte, die in Abhängigkeit von der Zeit dargestellt sind;
- Fig. 5: ein Ablaufdiagramm für ein erstes Ausführungsbeispiel für ein Verfahren zum Betreiben eines Küchengeräts;
- Fig. 6: ein Ablaufdiagramm für ein zweites Ausführungsbeispiel für ein Verfahren zum Betreiben eines Küchengeräts;
- Fig. 7: ein Ausführungsbeispiel für ein System zum Zubereiten von Lebensmitteln in einer ersten Fallkonstellation; und
- Fig. 8: das System zum Zubereiten von Lebensmitteln aus der Fig. 7 in einer zweiten Fallkonstellation.

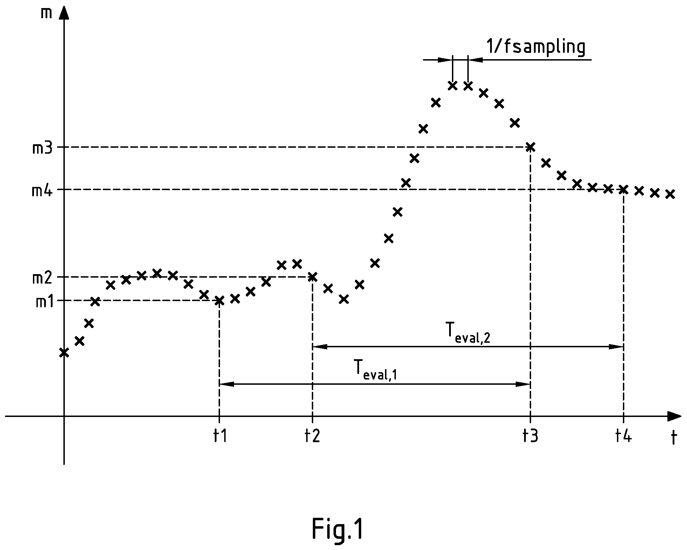

Bei einem Verfahren zum Betreiben eines Küchengeräts gemäß der vorliegenden Offenbarung ist vorgesehen, dass mindestens ein Wiegeparameter mehrfach erfasst wird, und dass ein Signal mit Wiegemesswerten ausgegeben wird, wobei die Wiegemesswerte dem Ergebnis der mehrfachen Erfassung des mindestens einen Wiegeparameters entsprechen. Die Fig. 1 zeigt ein erstes Beispiel für derartige Wiegemesswerte, die durch ein Wiegemodul erfasst worden sind, und die hier in Abhängigkeit von der Zeit dargestellt sind.

Die Wiegemesswerte haben einen Zeitabstand 1/f_{sampling}, der einer Abtastrate f_{sampling} entspricht, die für das Erfassen angewendet wurde.

Bei dem Verfahren wird das Signal mit den Wiegemesswerten in einem über die Zeit gleitenden Zeitintervall ausgewertet. Fig. 1 zeigt den Zeitintervall bei einer ersten Zeitposition (T_{eval,1}) und bei einer zweiten Zeitposition (T_{eval,2}). Der Zeitintervall in der ersten Zeitposition (T_{eval,1}) beginnt bei t₁ und endet bei t₃, der Zeitintervall in der zweiten Zeitposition (T_{eval,2}) beginnt bei t₂ und endet bei t₄.

So kann für den Zeitintervall in der ersten Zeitposition (T_{eval,1}) eine Differenz Δm₁ zwischen dem Wiegemesswert m₁, der für den Zeitpunkt t₁ erfasst worden ist, und dem Wiegemesswert m₃, der für den Zeitpunkt t₃ erfasst worden ist, gebildet werden. Ebenso kann für den Zeitintervall in der zweiten Zeitposition (T_{eval,2}) eine Differenz Δm₂ zwischen dem Wiegemesswert mz, der für den Zeitpunkt t₂ erfasst worden ist, und dem Wiegemesswert m₄, der für den Zeitpunkt t₄ erfasst worden ist, gebildet werden.

Wird dann im Rahmen der weiteren Auswertung festgestellt, dass die Differenz Δm₁ oder die Differenz Δm₂ einem Referenzwert, beispielsweise einem Eigengewicht eines einzusetzenden bzw. eines zulässigen Zubehörteils entspricht, dann wird dieses Zubehörteil als möglicherweise erkanntes Zubehörteil eingestuft. Alternativ oder zusätzlich kann ein weiterer Auswertungsschritt automatisch eingeleitet werden, beispielsweise auf der Grundlage eines Erkennens eines Einsetzmusters für das Zubehörteil.

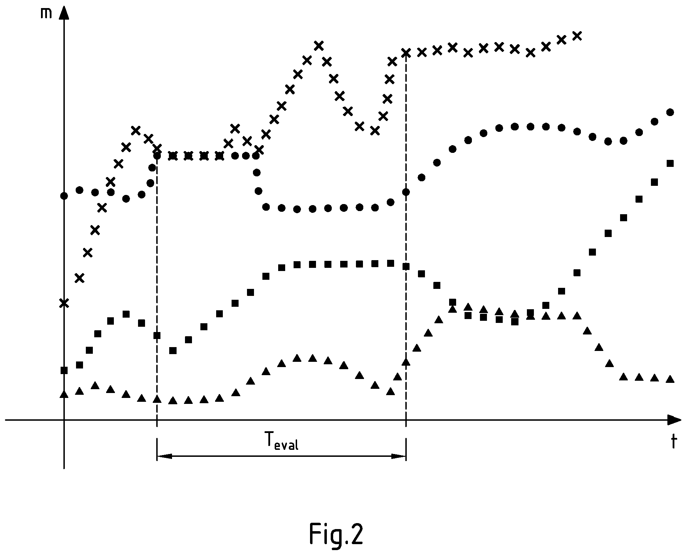

Fig. 2 zeigt ein zweites Beispiel für Wiegemesswerte, die durch ein Waagemodul (Kreuzzeichen in der Fig. 2) und durch drei Dehnmessstreifen (runde Punkte, Vierecke und Dreiecke in der Fig. 2) eines Küchengeräts zeitlich parallel erfasst worden sind. Die Dehnmessstreifen sind Kraftmesser, die an drei Füßen des Küchengeräts angeordnet sind.

Nachdem eine Gewichtsänderung Δm im Verlauf der Wiegemesswerte (Zeitposition (Tₑᵥₐₗ)), die durch das Waagemodul erfasst worden sind, festgestellt wurde und durch Vergleich mit Referenzwerten als ähnlich zu dem Eigengewicht eines einzusetzenden Zubehörteils eingestuft wurde, werden die Wiegemesswerte, die durch die Dehnmessstreifen erfasst worden sind, ausgewertet.

Durch die Geometrie des Zubehörteils, das Einsetzverhalten des Nutzers, der das Zubehörteil am Küchengerät eingesetzt hat, und das Gewicht des Zubehörteils ergeben sich spezifische Muster, die mittels bestimmten Algorithmen erkannt werden können. Durch Berücksichtigen von diesen Mustern bei der Auswertung kann ausgeschlossen werden, dass durch z.B. Rütteln am Deckel, Drücken auf das Küchengerät oder Hinzufügen von Zutaten ein Zubehörteil falsch oder fehlerhaft erkannt bzw. aberkannt wird.

Die in der Fig. 2 dargestellten Wiegemesswerte wurden beim Einsetzen eines Zubehörteils am Küchengerät erfasst und bilden zusammen ein erfasstes Muster für das Einsetzen dieses Zubehörteils.

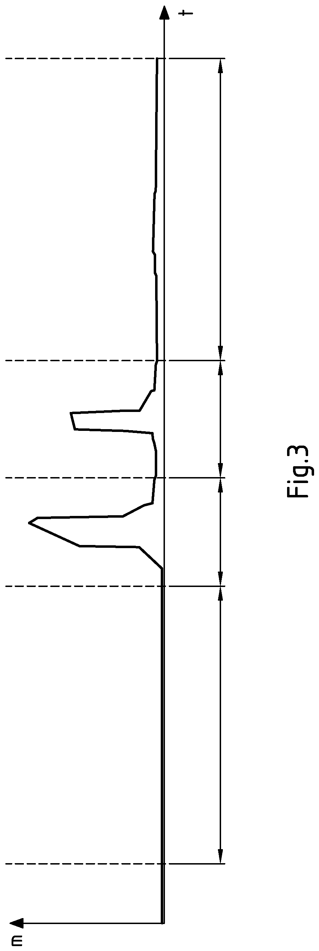

Fig. 3 zeigt ein drittes Beispiel für Wiegemesswerte, die in Abhängigkeit von der Zeit dargestellt sind. Die Wiegemesswerte wurden durch ein Waagemodul eines Küchengeräts unter anderem beim Einsetzen eines Zubehörteils in Form eines Rühraufsatzes am Küchengerät erfasst und zeigen ein typisches Muster für das Einsetzen des Rühraufsatzes.

Bei den gezeigten Wiegemesswerten sind mindestens vier Abschnitte zu erkennen. Bei einem ersten Abschnitt sind die Wiegemesswerte im Wesentlichen konstant über die Zeit. Bei einem zweiten Abschnitt ist eine Gewichtsänderung zu erkennen, die das Einsetzen des Rühraufsatzes widerspiegelt. Bei einem dritten Abschnitt ist ebenfalls eine Gewichtsänderung zu erkennen, wobei diese einer Nutzereingabe durch Drücken auf einem berührungsempfindlichen Anzeigemodul des Küchengeräts zuzuordnen ist. Bei einem vierten Abschnitt sind die Wiegemesswerte im Wesentlichen konstant über die Zeit, wobei der Betragsunterschied zwischen den Wiegemesswerten aus dem ersten Abschnitt und den Wiegemesswerten aus dem vierten Abschnitt im Wesentlichen dem Eigengewicht des eingesetzten Rühraufsatzes entspricht.

Bei der Auswertung des Signals mit den Wiegemesswerten können Informationen von der Steuereinrichtung berücksichtigt werden, um zum Beispiel Messabschnitte als nicht zu einem Einsetzen eines Zubehörteils gehörend einzustufen. In dem Beispiel aus der Fig. 3 kann eine Information über eine Nutzereingabe am Anzeigemodul herangezogen werden, um die Gewichtsänderung aus dem dritten Abschnitt als durch eine Nutzereingabe verursacht einzuordnen und für das Erkennen eines Zubehörteils außer Betracht zu lassen.

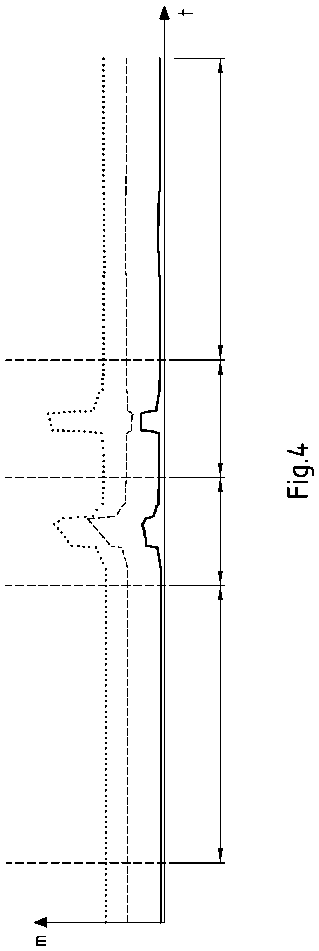

Fig. 4 zeigt ein viertes Beispiel für Wiegemesswerte, die in Abhängigkeit von der Zeit dargestellt sind. Die Wiegemesswerte wurden durch drei Dehnmessstreifen, die an Füßen eines Küchengeräts angeordnet sind, zeitlich parallel erfasst.

Wie bei der Fig. 3 sind mindestens vier Abschnitte zu erkennen, die jeweils einen Ruhestand des Küchengeräts, ein Einsetzen eines Rühraufsatzes, eine Nutzereingabe durch Drücken an einem Anzeigemodul und einem weiteren Ruhestand, diesmal mit dem eingesetzten Rühraufsatz, widerspiegeln. Dabei ist anzumerken, dass die Dehnstreifen unterschiedliche Wiegemesswerte für dasselbe Ereignis erfassen. So können die Muster, die die Wiegemesswerte aus den jeweiligen Dehnmessstreifen bilden, zusammen als erfasstes Muster betrachtet werden, und für das Erkennen eines bestimmungsgemäßen Einsetzens des Zubehörteils verwendet werden. Dadurch können die Erfolgsaussichten des Erkennungsvorgangs und auch die Vielfalt an möglichen erkennbaren Zubehörteilen gesteigert werden.

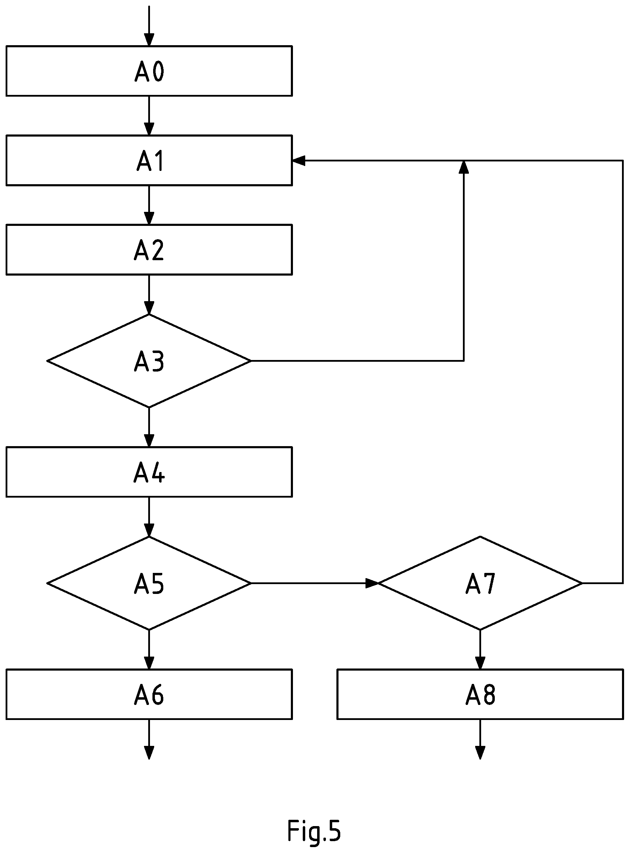

Fig. 5 zeigt ein Ablaufdiagramm für ein erstes Ausführungsbeispiel für ein Verfahren 500 zum Betreiben eines Küchengeräts.

In einem ersten Schritt A0 wird eine Zubereitungsvorschrift mit Weisungen zum Zubereiten mindestens eines Lebensmittels aufgerufen, wobei eine Weisung der Zubereitungsvorschrift einem Einsetzen eines Zubehörteils in Form eines Rühraufsatzes am Küchengerät entspricht.

In einem weiteren Schritt A1 wird ein Erfassen eines Wiegeparameters, in dem vorliegenden Fall ein Gewicht, gestartet. Das Erfassen erfolgt parallel durch ein Waagemodul und durch mindestens zwei Kraftmesser. Ferner umfasst das Erfassen mehrere Erfassungsvorgänge, die zeitlich jeweils für das Waagemodul und die mindestens zwei Kraftmesser nacheinander durchgeführt werden. So wird ein Gewicht mehrfach über die Zeit erfasst, wobei pro Erfassungsvorgang und pro Erfassungsmittel ein Wiegemesswert für das Gewicht festgestellt wird. Ein Signal mit den Wiegemesswerten, die dem Ergebnis des Erfassens mit den mehrfachen Erfassungsvorgänge entsprechen, wird jeweils durch das Waagemodul und durch die mindestens zwei Kraftmesser ausgegeben.

In einem Schritt A2 wird das Signal vom Waagemodul mit den Wiegemesswerten in einem über die Zeit gleitenden Zeitintervall Tₑᵥₐₗ ausgewertet. Hierzu wird eine Differenz Δm zwischen einem Wiegemesswert, der bei einem ersten Zeitpunkt des Zeitintervalls Tₑᵥₐₗ erfasst worden ist, und einem Wiegemesswert, der bei einem zweiten Zeitpunkt des Zeitintervalls Tₑᵥₐₗ erfasst worden ist, gebildet. Die gebildete Differenz Δm wird dann mit einem Referenzwert Δm_{ref} aus der Zubereitungsvorschrift verglichen, wobei der Referenzwert Δm_{ref} dem laut Zubereitungsvorschrift einzusetzenden Rühraufsatz zugeordnet ist.

In einem Schritt A3 wird dann das Vergleichsergebnis analysiert und festgestellt, ob die Differenz Δm dem Referenzwert Δm_{ref} innerhalb eines vorgegebenen Toleranzbereichs entspricht. Entspricht die Differenz Δm dem Referenzwert Δm_{ref}, dann wird der nächste Schritt A4 eingeleitet. Entspricht die Differenz Δm dem Referenzwert Δm_{ref} nicht, dann wird das Verfahren zurück zum Schritt A1 aufgenommen.

In einem Schritt A4 wird dann durch einen Algorithmus aus den Signalen, die durch die Kraftmesser ausgegeben werden, ein erfasstes Muster extrahiert, wobei das erfasste Muster durch die Wiegemesswerte gebildet ist. Dann wird das erfasste Muster mit einem Referenzmuster verglichen, das dem einzusetzenden Rühraufsatz zugeordnet ist.

In einem Schritt A5 wird dann das Vergleichsergebnis analysiert und festgestellt, ob das erfasste Muster dem Referenzmuster innerhalb eines ersten, relativen engen Toleranzbereichs zumindest im Wesentlichen entspricht. Wird festgestellt, dass das erfasste Muster dem Referenzmuster innerhalb des ersten, relativen engen Toleranzbereichs entspricht, dann wird ein Schritt A6 eingeleitet. Wird festgestellt, dass das erfasste Muster dem Referenzmuster innerhalb des ersten, relativen engen Toleranzbereichs nicht entspricht, dann wird ein Schritt A7 eingeleitet.

In dem Schritt A6 wird das bestimmungsgemäße Einsetzen des Rühraufsatzes automatisch bestätigt und der nächste Schritt der Zubereitungsvorschrift automatisch eingeleitet.

In dem Schritt A7 wird das Ergebnis des Vergleichs aus dem Schritt A4 erneut analysiert und festgestellt, ob das erfasste Muster dem Referenzmuster innerhalb eines zweiten, im Vergleich zum ersten Toleranzbereich weiteren Toleranzbereichs zumindest im Wesentlichen entspricht. Wird festgestellt, dass das erfasste Muster dem Referenzmuster innerhalb des zweiten Toleranzbereichs entspricht, dann wird ein Schritt A8 eingeleitet. Wird festgestellt, dass das erfasste Muster dem Referenzmuster innerhalb des zweiten Toleranzbereichs nicht entspricht, dann wird das Verfahren wieder beim Schritt A1 aufgegriffen.

In dem Schritt A8 wird ein Hinweis ausgegeben, dass der Rühraufsatz erkannt worden ist, allerdings als dieser nicht bestimmungsgemäß eingesetzt worden ist. Ggf. kann der Hinweis in Form einer Sicherheitswarnung ausgegeben werden.

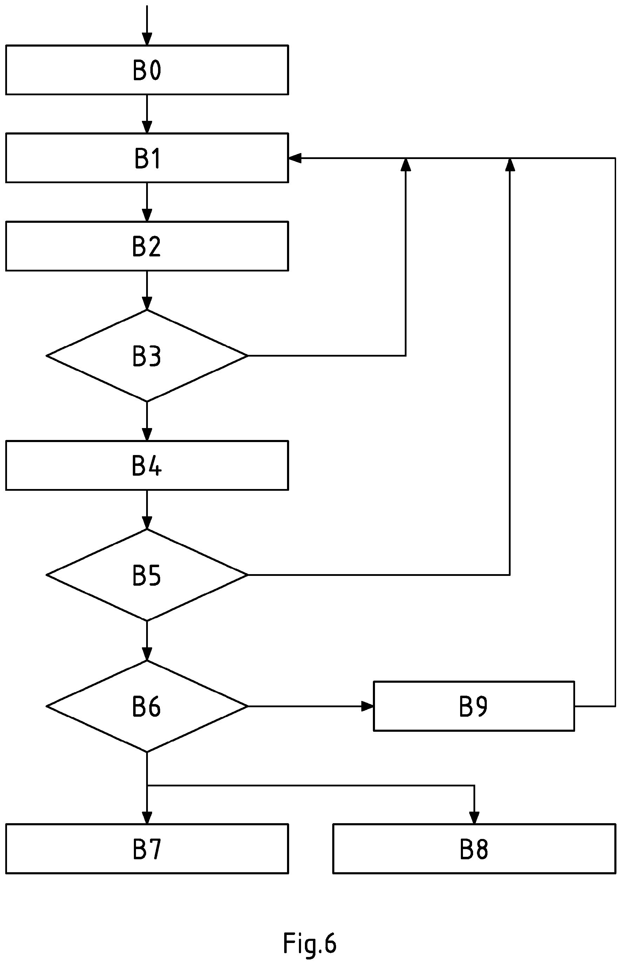

Fig. 6 zeigt ein Ablaufdiagramm für ein zweites Ausführungsbeispiel für ein Verfahren 600 zum Betreiben eines Küchengeräts.

In einem ersten Schritt B0 wird ein Küchengerät mit einer Steuereinrichtung und mit einer Anzeigeeinrichtung zur Verfügung gestellt, wobei die Anzeigeeinrichtung in einem Ruhemodus oder "Stand-by" Modus ist. Dabei führt eine Wiegeeinrichtung des Küchengeräts ein Erfassen mit einer geringen Abtastrate kontinuierlich durch, beispielsweise mit einem Erfassungsvorgang pro halbe Minute. Die Steuereinrichtung ist dazu eingerichtet, ein Signal aus der Wiegeeinrichtung mit Wiegemesswerten aus den einzelnen Erfassungsvorgängen mit einem über die Zeit gleitenden Zeitintervall Tₑᵥₐₗ auszuwerten, wobei lediglich beobachtet wird, ob eine Gewichtsänderung erfasst worden ist.

In einem weiteren Schritt B1 wird bei der Auswertung festgestellt, dass die Wiegemesswerte eine Gewichtsänderung widerspiegeln. Als Reaktion hierauf wird die Anzeigeeinrichtung durch eine Anweisung aus der Steuereinrichtung des Küchengeräts hochgefahren und in einen Wachmodus gebracht. Daneben wird das Erfassen mit einer höheren Abtastrate durchgeführt, um eine erhöhte Anzahl an Wiegemesswerten in dem Zeitintervall Tₑᵥₐₗ zu erhalten, und somit auch ggf. ein Muster erfassen zu können.

Das Erfassen erfolgt in parallel durch ein Waagemodul und durch mindestens zwei Kraftmesser. Ferner umfasst das Erfassen mehrere Erfassungsvorgänge, die zeitlich jeweils für das Waagemodul und die mindestens zwei Kraftmesser nacheinander durchgeführt werden. So wird ein Gewicht mehrfach über die Zeit erfasst, wobei pro Erfassungsvorgang und pro Erfassungsmittel ein Wiegemesswert für das Gewicht festgestellt wird. Ein Signal mit den Wiegemesswerten, die dem Ergebnis des Erfassens mit den mehrfachen Erfassungsvorgängen entsprechen, wird jeweils durch das Waagemodul und durch die mindestens zwei Kraftmesser ausgegeben.

In einem Schritt B2 wird das Signal vom Waagemodul mit den Wiegemesswerten in dem über die Zeit gleitenden Zeitintervall Tₑᵥₐₗ ausgewertet. Hierzu wird eine Differenz Δm zwischen einem Wiegemesswert, der bei einem ersten Zeitpunkt des Zeitintervalls Tₑᵥₐₗ erfasst worden ist, und einem Wiegemesswert, der bei einem zweiten Zeitpunkt des Zeitintervalls Tₑᵥₐₗ erfasst worden ist, gebildet. Die gebildete Differenz Δm wird dann mit Referenzwerten Δm_{ref,1}, Δm_{ref,2}, usw. aus einer Datenbank verglichen, wobei die Referenzwerte jeweils einem für das Küchengerät geeigneten oder zulässigen Zubehörteil zugeordnet sind. Beispielsweise können die Referenzwerte Δm_{ref,1} und Δm_{ref,2} jeweils einem Garaufsatz und einem Rühraufsatz zugeordnet sein.

In einem Schritt B3 wird dann das Vergleichsergebnis analysiert und festgestellt, ob die Differenz Δm einem der Referenzwerte Δm_{ref,1} oder Δm_{ref,2} innerhalb eines vorgegebenen Toleranzbereichs entspricht. Entspricht die Differenz Δm beispielsweise sowohl dem Referenzwert Δm_{ref,1} als auch dem Referenzwert Δm_{ref,2}, so wird ein Schritt B4 eingeleitet. Entspricht die Differenz Δm keinem der Referenzwerte Δm_{ref,1} oder Δm_{ref,2}, dann wird das Verfahren zurück beim Schritt B1 aufgenommen, wobei die Anzeigeeinrichtung des Küchengeräts bereits aufgefahren ist.

Im Schritt B4 wird dann durch einen Algorithmus aus den Signalen, die durch die Kraftmesser ausgegeben werden, ein erfasstes Muster extrahiert, wobei das erfasste Muster durch die Wiegemesswerte gebildet ist. Dann wird das erfasste Muster einerseits mit einem Referenzmuster für das Einsetzen eines Garaufsatzes, und andererseits mit einem Referenzmuster für ein Einsetzen eines Rühraufaufsatzes verglichen.

In einem Schritt B5 werden dann die Vergleichsergebnisse analysiert und festgestellt, ob das erfasste Muster dem Referenzmuster für das Einsetzen eines Garaufsatzes und / oder dem Referenzmuster für das Einsetzen eines Rühraufsatzes zumindest im Wesentlichen entspricht.

Wird festgestellt, dass das erfasste Muster dem Referenzmuster für das Einsetzen eines Garaufsatzes und / oder dem Referenzmuster für das Einsetzen eines Rühraufsatzes zumindest im Wesentlichen entspricht, dann wird ein Schritt B6 eingeleitet. Wird festgestellt, dass das erfasste Muster weder dem Referenzmuster für das Einsetzen eines Garaufsatzes noch dem Referenzmuster für das Einsetzen eines Rühraufsatzes zumindest im Wesentlichen entspricht, dann wird das Verfahren zurück beim Schritt B1 aufgenommen, wobei die Anzeigeeinrichtung des Küchengeräts bereits aufgefahren ist.

In dem Schritt B7 wird auf der Grundlage des Vergleichsergebnisses aus dem Schritt B5 ermittelt, ob das erfasste Muster dem Referenzmuster für das Einsetzen eines Garaufsatzes und / oder dem Referenzmuster für das Einsetzen eines Rühraufsatzes zumindest im Wesentlichen entspricht. Wird festgestellt, dass das erfasste Muster dem Referenzmuster für das Einsetzen eines Garaufsatzes zumindest im Wesentlichen entspricht, dann wird ein Schritt B7 eingeleitet. Wird festgestellt, dass das erfasste Muster dem Referenzmuster für das Einsetzen eines Rühraufsatzes zumindest im Wesentlichen entspricht, dann wird ein Schritt B8 eingeleitet. Wird festgestellt, dass das erfasste Muster sowohl dem Referenzmuster für das Einsetzen eines Garaufsatzes als auch dem Referenzmuster für das Einsetzen eines Rühraufsatzes zumindest im Wesentlichen entspricht, dann wird das Verfahren zurück beim Schritt B1 aufgenommen, wobei die Anzeigeeinrichtung des Küchengeräts bereits aufgefahren ist.

In dem Schritt B7 wird ein Garaufsatz als erkannt eingestuft und sein bestimmungsgemäßes Einsetzen automatisch bestätigt. Ggf. wird mindestens eine Zubereitungsvorschrift für einen Zubereitungsvorgang mit einem Garaufsatz aufgerufen.

In dem Schritt B8 wird ein Rühraufsatz als erkannt eingestuft und sein bestimmungsgemäßes Einsetzen automatisch bestätigt. Ggf. wird mindestens eine Zubereitungsvorschrift für einen Zubereitungsvorgang mit einem Rühraufsatz aufgerufen.

In dem Schritt B9 wird das Ergebnis der Auswertung als Feststellen einer Gewichtsänderung allerdings ohne erfolgreiche Zuordnung zu einem bestimmten Zubehörteil oder zu einem bestimmten bestimmungsgemäßen Einsetzen eines Zubehörteils eingestuft. Dann wird das Verfahren zurück beim Schritt B1 aufgenommen, wobei die Anzeigeeinrichtung des Küchengeräts bereits aufgefahren ist.

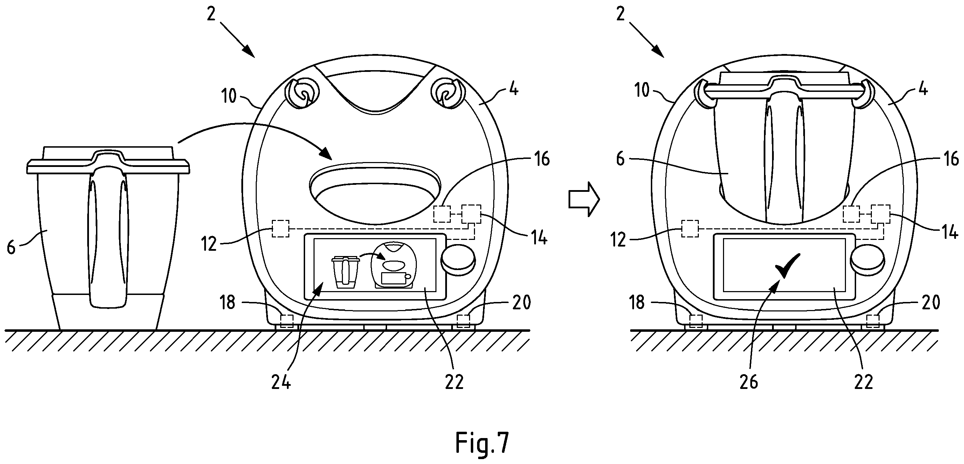

Fig. 7 zeigt ein Ausführungsbeispiel für ein System 2 zum Zubereiten von Lebensmitteln in einer ersten Fallkonstellation. Das System 2 zum Zubereiten von Lebensmitteln weist ein Küchengerät 4 in Form eines Grundgeräts und ein Zubehörteil 6 auf. Das Zubehörteil 6 ist als Kochgefäß mit einem angebrachten Deckel ausgebildet. Das Küchengerät 4 weist ein Gehäuse 10, einen Elektromotor 12 zum Antrieb eines Funktionsteils eines Zubehörteils 6, eine Steuereinrichtung 14, eine Wiegeeinrichtung 16 in Form einer Waage, zwei analoge Kraftmesser 18, 20 und eine Kommunikationsschnittstelle 22 auf.

Die Wiegeeinrichtung 16 ist dazu eingerichtet, ein Gewicht mehrfach über dies zu erfassen und ein Signal mit entsprechenden Wiegemesswerten oder Gewichtswerten auszugeben und an die Steuereinrichtung 14 weiterzuleiten. Die zwei Kraftmesser 18, 20 sind jeweils dazu eingerichtet, eine Kraft mehrfach über diese zu erfassen und ein Signal mit entsprechenden Wiegemesswerten oder Kraftwerten auszugeben und an die Steuereinrichtung 14 weiterzuleiten.

Die Steuereinrichtung 14 ist dazu eingerichtet, die jeweiligen Signale mit den Wiegemesswerten in einem über die Zeit gleitenden Zeitintervall Tₑᵥₐₗ auszuwerten und auf der Grundlage der Wiegemesswerte ein Zubehörteil für das Küchengerät bzw. für das Grundgerät zu erkennen.

In der dargestellten Fallkonstellation ist das Zubehörteil 6 zunächst vom Küchengerät 4 entfernt (linker Teil der Fig. 7) und dann am Küchengerät 4 eingesetzt (rechter Teil der Fig. 7). In der vom Küchengerät 4 entfernten Position des Zubehörteils 6 zeigt die Kommunikationsschnittstelle 22 eine Anweisung 24 an, einen Kochtopf mit Deckel am Küchengerät 4 einzusetzen. Nach Einsetzen des Zubehörteils 6 bzw. des Kochtopfes mit dem Deckel wurde beim Auswerten der Signale aus der Wiegeeinrichtung 16 und aus den analogem Kraftmessern 18, 20 eine Gewichtsänderung durch die Steuereinrichtung 14 ermittelt, die der Summe des Eigengewichts eines Kochtopfes und des Eigengewichts eines Deckels entspricht.

So wurde ein Einsetzen eines Kochtopfes mit Deckel durch die Steuereinrichtung 14 erkannt. Anschließend hat die Steuerungseinrichtung 14 das bestimmungsgemäße Einsetzen des richtigen Zubehörteils 6 selbstständig und automatisch bestätigt und auch die Kommunikationsschnittstelle 16 veranlasst, einen entsprechenden Nutzerhinweis 26 anzuzeigen.

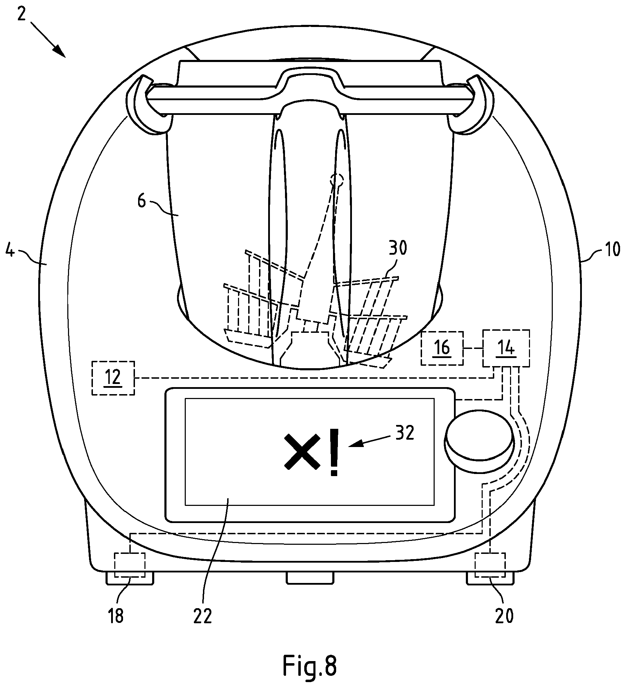

Fig. 8 zeigt das System 2 zum Zubereiten von Lebensmitteln aus der Fig. 7 in einer zweiten Fallkonstellation. In der Fig. 8 ist ein zusätzliches Zubehörteil 30 in Form eines Rühraufsatzes vorgesehen. In der dargestellten Konstellation ist das zusätzliche Zubehörteil 30 nicht richtig eingesetzt bzw. seine Position ermöglicht kein bestimmungsgemäßes Zusammenwirken mit dem Elektromotor 12 des Küchengeräts 4.

Beim Auswerten der Signale aus der Wiegeeinrichtung 16 und aus den Kraftmessern 18, 20 durch die Steuereinrichtung 14 wurde ein erfasstes Muster ermittelt, das keinem Referenzmuster für ein bestimmungsgemäßes Einsetzen eines Rühraufsatzes entspricht.

Daraufhin hat die Steuereinrichtung 14 die Kommunikationsschnittstelle 16 veranlasst, einen entsprechenden Nutzerhinweis 32 anzuzeigen, hier einen Warnhinweis. Darüber hinaus unterbindet die Steuereinrichtung 14 ein Antreiben des zusätzlichen Zubehörteils 30 durch den Elektromotor 12, bis ein bestimmungsgemäßes Einsetzen des zusätzlichen Zubehörteils 30 bzw. des Rühraufsatzes erkannt wird.

## Patentansprüche

1. Verfahren (500, 600) zum Betreiben eines Küchengeräts (4),
- bei dem mindestens ein Wiegeparameter mehrfach erfasst wird,
- bei dem ein Signal mit Wiegemesswerten ausgegeben wird, wobei die Wiegemesswerte dem Ergebnis der mehrfachen Erfassung des mindestens einen Wiegeparameters entsprechen, und
- bei dem das Signal mit den Wiegemesswerten in einem über die Zeit gleitenden Zeitintervall Tₑᵥₐₗ ausgewertet wird,
**dadurch gekennzeichnet,**
- **dass** auf der Grundlage der Wiegemesswerte ein Zubehörteil (6, 30) für das Küchengerät (4) erkannt wird.

2. Verfahren (500, 600) nach Anspruch 1,
**dadurch gekennzeichnet,**
- **dass** Wiegemesswerte zusammen ein erfasstes Muster bilden,
- **dass** das erfasste Muster mit einem Referenzmuster verglichen wird, wobei das Referenzmuster einem Zubehörteil (6, 30) zugeordnet ist, und
- **dass** das Zubehörteil (6, 30) auf der Grundlage des Ergebnisses des Vergleiches zwischen dem erfassten Muster und dem Referenzmuster erkannt wird.

3. Verfahren (500, 600) nach Anspruch 2,
**dadurch gekennzeichnet,**
- **dass** ein bestimmungsgemäßes Einsetzen des Zubehörteils (6, 30) auf der Grundlage des Ergebnisses des Vergleiches zwischen dem erfassten Muster und dem Referenzmuster erkannt wird.

4. Verfahren (500, 600) nach einem der voranstehenden Ansprüche,
**dadurch gekennzeichnet,**
- **dass** eine Differenz Δm zwischen einem Wiegemesswert, der bei einem ersten Zeitpunkt des Zeitintervalls Tₑᵥₐₗ erfasst worden ist, und einem Wiegemesswert, der bei einem zweiten Zeitpunkt des Zeitintervalls Tₑᵥₐₗ erfasst worden ist, gebildet wird, und
- **dass** die gebildete Differenz Δm mit einem Referenzwert Δm_{ref} verglichen wird, wobei der Referenzwert Δm_{ref} dem Zubehörteil (6, 30) zugeordnet ist.

5. Verfahren (500, 600) nach den Anspruch 4,
**dadurch gekennzeichnet,**
- **dass** auf der Grundlage der gebildeten Differenz Δm_{ref} eine Wahrscheinlichkeit für den Einsatz des Zubehörteils (6, 30) bestimmt wird,
- **dass** die Wahrscheinlichkeit mit einer Wahrscheinlichkeitsschwelle verglichen wird,
- **dass**, falls die bestimmte Wahrscheinlichkeit die Wahrscheinlichkeitsschwelle überschreitet, das erfasstes Muster mit dem Referenzmuster verglichen wird, wobei das Referenzmuster dem Zubehörteil (6, 30) zugeordnet ist, und
- **dass** auf der Grundlage des Vergleichsergebnisses das Zubehörteil (6, 30) erkannt wird.

6. Verfahren (500, 600) nach einem der Ansprüche 2 bis 5,
**dadurch gekennzeichnet,**
- **dass** das Signal mit den Wiegemesswerten durch ein Verfahren basierend auf maschinellem Lernen ausgewertet werden, wobei das Ergebnis der Auswertung eine Information über das erfasste Muster ist,
oder
- **dass** das Signal mit den Wiegemesswerten durch ein Verfahren basierend auf einem analytischen Algorithmus ausgewertet werden, wobei das Ergebnis der Auswertung eine Information über das erfasste Muster ist.

7. Verfahren (500, 600) nach einem der voranstehenden Ansprüche,
**dadurch gekennzeichnet,**
- **dass** vor dem Erfassen des mindestens einen Wiegeparameters eine Zubereitungsvorschrift mit Weisungen zum Zubereiten mindestens eines Lebensmittels aufgerufen wird, wobei mindestens eine Weisung der Zubereitungsvorschrift einem Einsetzen eines Zubehörteils (6, 30) am Küchengerät (4) entspricht, und dass bei der Auswertung des Signals die Wiegemessewerte mit einer dem Zubehörteil (6, 30) zugeordneten Information, insbesondere mit einem dem Zubehörteil (6, 30) zugeordneten Referenzwert oder mit einem dem Zubehörteil (6, 30) zugeordneten Referenzmuster, verglichen wird,
oder
- **dass** vor dem Erfassen des mindestens einen Wiegeparameters eine Zubereitungsvorschrift mit Weisungen zum Zubereiten mindestens eines Lebensmittels aufgerufen wird, wobei mindestens eine Weisung der Zubereitungsvorschrift einem Einsetzen eines Zubehörteils (6, 30) am Küchengerät (4) entspricht, und wobei mindestens eine Weisung der Zubereitungsvorschrift einem Lebensmittelgewicht entspricht, und dass bei der Auswertung des Signals die Wiegemessewerte mit einer dem Zubehörteil (6, 30) zugeordneten Information, insbesondere mit einem dem Zubehörteil (6, 30) zugeordneten Referenzwert oder mit einem dem Zubehörteil (6, 30) zugeordneten Referenzmuster, unter Berücksichtigung des Lebensmittelgewichts verglichen wird.

8. Verfahren (500, 600) nach Anspruch 7,
**dadurch gekennzeichnet,**
- **dass** die Zubereitungsvorschrift ein Einsetzen von mindestens zwei unterschiedlichen Zubehörteilen (6, 30) vorsieht, und
- **dass**, wenn bei der Auswertung des Signals Vergleiche der Wiegemesswerte mit Informationen, die den unterschiedlichen Zubehörteilen (6, 30) zugeordnet sind, ähnliche Ergebnisse ergeben, dasjenige Zubehörteil (6, 30) als erkannt und / oder als bestimmungsgemäß eingesetzt angegeben wird, das in einem aktuellen Zubereitungsschritt bzw. in einer aktuell durchzuführenden Weisung der Zubereitungsvorschrift vorgesehen ist.

9. Verfahren (500, 600) nach einem der Ansprüche 1 bis 6,
**dadurch gekennzeichnet,**
- **dass** das Erfassen des mindestens einen Wiegeparameters und die Auswertung des Signals mit den Wiegemesswerten im Anschluss zu einem Hochfahren oder Aktivieren des Küchengeräts (4) eingeleitet werden, und
- **dass** bei der Auswertung des Signals die Wiegemessewerte mit Informationen aus einer Datenbank, insbesondere mit einem Referenzwert oder mit einem Referenzmuster verglichen werden, die jeweils einem mit dem Küchengerät (4) kompatiblen Zubehörteil (6, 30) zugeordnet sind.

10. Verfahren (500, 600) nach Anspruch 9,
**dadurch gekennzeichnet,**
- **dass** beim positiven Erkennen eines Zubehörteils (6, 30) eine für das erkannte Zubehörteil (6, 30) geeignete Zubereitungsvorschrift aufgerufen wird,
oder
- **dass** beim positiven Erkennen eines Zubehörteils (6, 30) und eines bestimmungsgemäßen Einsetzens des erkannten Zubehörteils (6, 30) eine für das erkannte Zubehörteil (6, 30) geeignete Zubereitungsvorschrift automatisch aufgerufen wird.

11. Küchengerät (4)
- mit einem Gehäuse (10),
- mit einer Wiegeeinrichtung (16, 18, 20) und
- mit einer Steuereinrichtung (14),
- wobei die Wiegeeinrichtung (16, 18, 20) dazu eingerichtet ist, mindestens ein Wiegeparameter mehrfach über die Zeit zu erfassen und ein Signal mit Wiegemesswerten, die dem mindestens einen, mehrfach über die Zeit erfassten Wiegeparameter entsprechen, auszugeben und an die Steuereinrichtung (14) weiterzuleiten,
**dadurch gekennzeichnet,**
- **dass** die Steuereinrichtung (14) dazu eingerichtet ist, das Signal mit den Wiegemesswerten auszuwerten und auf der Grundlage der Wiegemesswerte ein Zubehörteil (6, 30) für das Küchengerät (4) zu erkennen, insbesondere ein bestimmungsgemäßes Einsetzen des Zubehörteils (6, 30) zu erkennen.

12. Küchengerät (4) nach Anspruch 11,
**dadurch gekennzeichnet,**
- **dass** die Wiegeeinrichtung (16, 18, 20) und die Steuereinrichtung (14) zusammen dazu eingerichtet sind, ein Verfahren (500, 600) nach einem der Ansprüche 1 bis 9 durchzuführen.

13. System (2) zum Zubereiten von Lebensmitteln,
- mit einem eine Wiegeeinrichtung (16, 18, 20) und eine Steuereinrichtung (14) aufweisenden Küchengerät (4), insbesondere einem Küchengerät (4) nach Anspruch 11 oder 12, und
- mit mindesten einem Zubehörteil (6, 30),
**dadurch gekennzeichnet,**
- **dass** die Steuereinrichtung (14) des Küchengeräts (4) dazu eingerichtet ist, das mindestens eine Zubehörteil (6, 30), insbesondere ein bestimmungsgemäßes Einsetzen des mindestens einen Zubehörteils (6, 30) am Küchengerät (4), auf der Grundlage von durch die Wiegeeinrichtung (16, 18, 20) des Küchengeräts (4) erfassten Wiegemesswerten zu erkennen.

14. System (2) nach Anspruch 13,
**dadurch gekennzeichnet,**
- **dass** eine Datenbank mit Informationen, die jeweils einem Zubehörteil (6, 30) zugeordnet sind, vorgesehen ist, und
- **dass** die Steuereinrichtung (14) dazu eingerichtet ist, die Informationen aus der Datenbank abzurufen und mit den erfassten Wiegemesswerten zu vergleichen.

15. Computerprogramm mit Weisungen, die, wenn durch einen Prozessor einer Steuereinrichtung (14) eines Küchengeräts (4) nach Anspruch 11 oder 12 oder eines Systems (2) nach einem der Ansprüche 13 oder 14 ausgeführt, das Küchengerät (4) dazu veranlasst, ein Verfahren (500, 600) nach einem der Ansprüche 1 bis 10 durchzuführen.
